Europäisches Patentamt

European Patent Office

Office européen des brevets

(19)

(11) Veröffentlichungsnummer : **0 150 420**
**B1**

(12) # EUROPÄISCHE PATENTSCHRIFT

(45) Veröffentlichungstag der Patentschrift :
**30.09.87**

(21) Anmeldenummer : **84115644.1**

(22) Anmeldetag : **17.12.84**

(51) Int. Cl.⁴ : **C 08 L 61/20**, **C 08 K 5/09**,
**C 09 J 3/16**

(54) **Wässrige Härterlösungen, Verwendung dieser Lösungen als Härter für Aminoplastharze, Leimharzflotten, enthaltend diese Härterlösungen sowie ein Verfahren zur Herstellung von Spanholzwerkstoffen.**

(30) Priorität : **11.01.84 DE 3400669**

(43) Veröffentlichungstag der Anmeldung :
**07.08.85 Patentblatt 85/32**

(45) Bekanntmachung des Hinweises auf die Patenterteilung : **30.09.87 Patentblatt 87/40**

(84) Benannte Vertragsstaaten :
**AT BE CH DE FR IT LI SE**

(56) Entgegenhaltungen :
**GB-A- 750 228**
**US-A- 2 009 545**
**US-A- 2 193 630**

(73) Patentinhaber : **BASF Aktiengesellschaft
Carl-Bosch-Strasse 38
D-6700 Ludwigshafen (DE)**

(72) Erfinder : **Mayer, Johann, Dr.
Am Mandelgarten 5
D-6713 Freinsheim (DE)**
Erfinder : **Schmidt-Hellerau, Christof
Rheinrugenstrasse 45
D-6700 Ludwigshafen (DE)**

EP 0 150 420 B1

**0 150 420**

## Beschreibung

Die vorliegende Erfindung betrifft neue wäßrige Härterlösungen auf der Basis der Diammoniumsalze einer Mischung aliphatischer Dicarbonsäuren, die Verwendung dieser Lösungen als Härter für Aminoplastharze, die zur Herstellung von Spanholzwerkstoffen verwendet werden, die diese Härterlösungen enthaltenden Leimharzflotten sowie ein Verfahren zur Herstellung von Spanholzwerkstoffen.

Bei der Verarbeitung von Aminoplasten erfolgt ein Übergang der löslichen und schmelzbaren Aminoplastvorkondensate in unschmelzbare und unlösliche Produkte. Bei diesem als Aushärtung bezeichneten Vorgang tritt eine durchgehende Vernetzung der Vorkondensate ein. Die Geschwindigkeit dieser Vernetzungsreaktion ist jedoch auch bei den erhöhten Verarbeitungstemperaturen für anwendungstechnische Prozesse zu gering und muß daher durch Zusätze von sogenannten Härtern beschleunigt werden.

Als Härter werden sauer reagierende und/oder säureabspaltende Verbindungen verwendet. Bekannte Härter dieser Art sind Ammonium- oder Aminsalze, z. B. Ammoniumchlorid, Ammoniumsulfat, Ammoniumformiat oder Alkanolaminsulfite (z. B. DE-A-2 736 404).

Nach dem Vorschlag der DE-B-2 754 171 sollen wäßrige Abfallstoffe die aus der Herstellung von Phthalsäureanhydrid durch katalytische Oxidation von o-Xylol oder Naphthalin stammen, mit Ammoniak oder Aminen versetzt werden und so als Härtemittel für aminoplastische Harze verwendet werden. Diese Abwässer enthalten Maleinsäureanhydrid, Fumarsäure, Citraconsäure, Benzoesäure, Phthalsäureanhydrid und Phthalid.

Dabei ist es unbedingt erforderlich, daß der pH-Wert dieser Härterlösungen im Bereich von 4,5 bis 5,0 gehalten wird, und daß zudem ein bestimmter Dichtebereich der Härterlösungen eingestellt wird.

Aufgabe der vorliegenden Erfindung war es, neue Härterlösungen bereitzustellen, deren Handhabung bezüglich Dichte und alkalischem pH-Bereich völlig problemlos ist und die gleichzeitig in der Lage sind, freien Formaldehyd zu binden, was mit den bekannten Härtern nicht gelingt.

Es wurden nun neue wäßrige Härterlösungen für Aminoplastharze, die zur Herstellung von Spanholzwerkstoffen verwendet werden, gefunden, enthaltend 2 bis 65 Gew.%, bezogen auf die Härterlösung an Diammoniumsalzen einer Mischung aliphatischer gesättigter Dicarbonsäuren mit 2 bis 10 Kohlenstoffatomen, deren Kohlenstoffkette gegebenenfalls durch Sauerstoffatome unterbrochen ist.

Die wäßrigen Lösungen der Diammoniumsalze zeigen eine vorteilhafte Wirkung, wenn man sie als Härter für Aminoplastharze verwendet.

Die aliphatischen gesättigten Dicarbonsäuren mit 2 bis 10 Kohlenstoffatomen, die solchen Mischungen zugrundeliegen, können geradkettig oder verzweigt sein und ihre Kohlenstoffkette kann gegebenenfalls durch Sauerstoffatome unterbrochen sein. Beispielsweise seien die Diammoniumsalze von Mischungen genannt, die Oxalsäure, Malonsäure, Methylmalonsäure, Bernsteinsäure, Glutarsäure, Adipinsäure, Pimelinsäure, 2,2-Dimethylglutarsäure, Korksäure, Acelainsäure, Sebacinsäure, Diglykolsäure und Triglykolsäure enthalten können.

Bevorzugt sind die Diammoniumsalze solcher Mischungen, die aliphatische gesättigte Dicarbonsäuren mit 4 bis 6 Kohlenstoffatome aufweisen.

Insbesondere sind die Diammoniumsalze von Mischungen zu nennen, die 23 bis 38 Gew.% Bernsteinsäure, 30 bis 55 Gew.% Glutarsäure und 20 bis 35 Gew.% Adipinsäure enthalten.

Die Mischungen der freien Carbonsäuren, die den zuletzt genannten, besonders bevorzugten Diammoniumsalzen zugrundeliegen, fallen beispielsweise bei der Cyclohexanoxidation als Nebenprodukte an.

Die Diammoniumsalze erhält man, indem man die jeweiligen Mischungen der Dicarbonsäuren mit Ammoniak umsetzt. Man verwendet dabei 0,7 bis 6 Äquivalente, vorteilhaft 0,8 bis 3 Äquivalente und insbesondere 1 bis 2 Äquivalente Ammoniak je Äquivalent Carboxylgruppen.

In manchen Fällen ist es von Vorteil, eine Teilmenge des zusätzlichen Ammoniaks getrennt von der Härterlösung dem Leimharz vorab zuzusetzen.

Beispielsweise versetzt man die pulverförmigen Mischungen der jeweiligen Dicarbonsäuren mit der entsprechenden Menge Ammoniak, wobei man üblicherweise wäßrige Ammoniaklösungen verwendet, z. B. in Form einer 25 gew.%igen Lösung. Durch die stark exotherme Neutralisationsreaktion erhitzt sich das Reaktionsgemisch auf eine Temperatur von 60 bis 80 °C und gleichzeitig tritt Lösung ein. Wegen der Flüchtigkeit von Ammoniak sollte allerdings dabei eine Temperatur von ca. 30 °C nicht überschritten werden, was unter Zuhilfenahme von Kühlung erreicht wird.

Durch weitere Zugabe von Wasser kann gegebenenfalls anschließend die gewünschte Konzentration eingestellt werden.

Verwendet man die bei der Cyclohexanoxidation als Nebenprodukt entstehenden Mischungen von Dicarbonsäuren, so kann man zunächst die üblicherweise als Schmelze anfallenden Mischungen, die eine Temperatur von ca. 125 °C aufweisen, mit 30 bis 70 Gew.% Wasser, bezogen auf die Mischungen der Dicarbonsäuren, versetzen. Man erhält auf diese Weise die entsprechenden wäßrigen Lösungen, deren Temperatur unter 100 °C liegt. Dabei ist aber Sorge zu tragen, daß die Temperatur immer so hoch bleibt, daß keine Kristallisation der Dicarbonsäuren eintritt. Durch Zugabe einer entsprechenden Menge wäßriger Ammoniaklösungen erfolgt dann die Neutralisation.

2

Die erfindungsgemäßen wäßrigen Härterlösungen enthalten 2 bis 65 Gew.%, vorzugsweise 15 bis 40 Gew.%, jeweils bezogen auf die Härterlösung, an Diammoniumsalzen.

Während im oberen Konzentrationsbereich (ca. 55 bis 65 Gew.% Diammoniumsalz, bezogen auf die Lösung), die überwiegende Anzahl der Diammoniumsalzlösungen der reinen Dicarbonsäuren bei Raumtemperatur nach kurzer Zeit teilweise oder vollständig auskristallisieren, zeichnen sich die erfindungsgemäßen Härterlösungen im entsprechenden Konzentrationsbereich durch besondere Stabilität aus, d. h. bei Raumtemperatur erfolgt kein Auskristallisieren der Diammoniumsalze.

Weiter wurde gefunden, daß die erfindungsgemäßen Härterlösungen vor allem bei tiefen Temperaturen (ca. 0 °C) dann besonders stabil sind, wenn sie Harnstoff enthalten. Der Anteil an zugesetztem Harnstoff sollte aber den Wert von 26 Gew.%, bezogen auf die Lösung, nicht überschreiten, da sonst, ebenso wie in völliger Abwesenheit von Harnstoff, die Neigung zum Auskristallisieren in diesem Temperaturbereich ansteigt.

Eine besonders vorteilhafte Härterlösung enthält beispielsweise 39 Gew.%, bezogen auf die Lösung, Diammoniumsalze einer Mischung aliphatischer gesättigter Dicarbonsäuren, enthaltend 23 bis 38 Gew.% Bernsteinsäure, 30 bis 55 Gew.% Glutarsäure und 20 bis 35 Gew.% Adipinsäure, sowie 26 Gew.%, bezogen auf die Lösung, Harnstoff.

Die erfindungsgemäßen Härterlösungen können auch mit anderen an sich bekannten Härtern abgemischt werden.

Als Aminoplastharze, die zur Herstellung von Spanholzwerkstoffen verwendet werden und deren Aushärtung mit den erfindungsgemäßen Härterlösungen erfolgt, kommen die üblichen Bindemittel auf der Grundlage von Formaldehydkondensaten der Harnstoffs oder Melamins in Betracht. Sie sind als wäßrige Lösungen oder Pulver im Handel und enthalten Harnstoff- und/oder Melamin-Formaldehyd-Kondensate. Auch Mischkondensate und Kondensate, die weitere Bestandteile, z. B. Phenol oder andere Aldehyde enthalten können, sind üblich. Ihre Herstellung und Verwendung ist allgemein bekannt und für die Erfindung ohne Belang.

Zur Bereitung der erfindungsgemäßen Leimharzflotten werden die genannten Härterlösungen den Leimharzen zugesetzt. Die erfindungsgemäßen Leimharzflotten sollen dabei 3 bis 19 Gew.%, bezogen auf den Flüssigharzanteil, an Härterlösung (berechnet ohne Harnstoff) enthalten.

Rohstoffe für Spanholzwerkstoffe sind, entsprechend dem Stand der Technik, beispielsweise Holzspäne von zerspanten Rund- und Knüppelhölzern, Sägewerks- und Furnierabfälle, Hobel- und Schälspäne sowie andere lignocellulosehaltige Rohmaterialien, z. B. Bagasse, Flachsschäben, Baumwollstengel, Jutestengel oder Kokosnußfasern.

Die Herstellung von Spanholzwerkstoffen mittels Aminoplastharzen gelingt vorteilhaft, wenn man die Aushärtung der Aminoplastharze mit der erfindungsgemäßen Härterlösung, wie sie oben beschrieben ist, durchführt.

Im Gegensatz zur bisherigen Lehre ergeben die erfindungsgemäßen Härterlösungen, deren pH-Wert im neutralen Bereich oder, bedingt durch einen Ammoniaküberschuß, im alkalischen Bereich liegt (z. B. pH 10), bei ihrer Dosierung, beispielsweise zu relativ formaldehydreichen Melamin-Harnstoff-Phenol-Formaldehyd-Harzen trotzdem sehr kurze Gelierzeiten (ca. 50 sec.). Auch bei wesentlich formaldehydärmeren Aminoplastharzen ergeben sich sehr kurze Gelierzeiten.

Die wichtigste Eigenschaft des neuen Härters besteht darin, daß er in der Lage ist, wesentliche Mengen an freiem Formaldehyd zu binden. Bei der Prüfung nach dem Extraktionsverfahren (« Perforatormethode » — DIN-EN 120) ergeben sich Werte < 10 mg freiem Formaldehyd pro 100 g Spanholzwerkstoff. Seine Anwendung bei der Herstellung von formaldehydarmen Spanplatten ist daher besonders vorteilhaft.

Während die meisten in der Praxis üblichen Formaldehydfänger in der Regel zu schlechteren Querzugfestigkeiten — insbesondere bei begrenzt wetterbeständiger Verleimung (V 100) — bei den entsprechend erhaltenen Spanplatten führen, erhält man hier bei Anwendung des erfindungsgemäßen Härters hohe Werte der Querzugfestigkeit.

Schließlich sei noch darauf hingewiesen, daß durch die Möglichkeit, die neuen Härterlösungen auch in sehr großer Konzentration stabil zu erhalten, bei deren Lagerung und Versand, insbesondere bei niederen Temperaturen, keinerlei Schwierigkeiten und Probleme entstehen.

Die nachfolgenden Beispiele sollen die Erfindung näher erläutern.

Beispiel 1

Es wurden Dreischichtplatten aus 50 Gew.% Buchenspänen und 50 Gew.% Fichtenspänen hergestellt (Dicke 20 mm). Die Liegezeit der beleimten Späne betrug 30 Minuten, ihre Preßzeit bei einer Temperatur von 170 °C auf einem Aluminiumblech betrug 225 Sekunden. Die Platten wurden 2 Tage lang nachgetempert.

Als Leimharz 1 diente die wäßrige Lösung eines Melamin-Harnstoff-Phenol-Formaldehyd-Harzes mit einem Trockengehalt von 63 ± 1 Gew.%, einem pH-Wert von ca. 8,9, einer Viskosität von ca. 550 bis 700 mPa · s (20 °C) und einer Dichte von ca. 1,27 bis 1,28 g/cm$^3$ (20 °C).

Die verwendeten Härterlösungen setzen sich folgendermaßen zusammen (Gew.%) :

|  | Salz 1* | NH$_4$Cl | Harnstoff | Ammoniak | Wasser |
|---|---|---|---|---|---|
| Härter 1 | 18,5 | - | 23,5 | 5,3 | 52,7 |
| Härter 2 | 26,2 | - | 25,0 | 2,1 | 46,7 |
| Vergleichs-härter 1 | - | 1,7 | 20,6 | 2,7 | 75,0 |
| Vergleichs-härter 2 | - | 5,0 | 25,4 | 3,4 | 66,2 |

* Als Salz 1 wird in den folgenden Beispielen das Diammoniumsalz einer Mischung, bestehend aus 28 Gew.% Bernsteinsäure, 44 Gew.% Glutarsäure und 28 Gew.% Adipinsäure, bezeichnet.

Ergebnisse siehe Tabelle 1.

### Beispiel 2

Es wurden Einschichtplatten aus 60 Gew.% Fichtenpänen und 40 Gew.% Buchenspänen hergestellt (Dicke 18 mm). Die Preßzeit betrug 225 Sekunden bei einer Temperatur von 175 °C. Die Platten wurden 2 Tage lang nachgetempert.

Als Leimharz diente das in Beispiel 1 beschriebene Leimharz 1. Die Festharzdosierung, bezogen auf absolut trockene Späne, betrug 12 Gew.%. (Im folgenden wird für den Begriff « absolut trocken » die in der Praxis übliche Abkürzung « atro » verwendet.)

Die verwendeten Härterlösungen setzen sich folgendermaßen zusammen (Gew.%) :

|  | Salz 1 | NH$_4$Cl | Harnstoff | Ammoniak | Wasser |
|---|---|---|---|---|---|
| Härter 3 | 24,8 | - | - | 2,0 | 73,2 |
| Härter 4 | 24,8 | - | 24,0 | 2,0 | 49,2 |
| Härter 5 | 12,6 | - | 24,0 | 4,4 | 59,0 |
| Härter 6 | 2,5 | - | 24,0 | 4,5 | 69,0 |
| Vergleichs-härter 2 | - | 4,8 | 24,0 | 2,0 | 69,2 |

Ergebnisse siehe Tabelle 2.

### Beispiel 3

Es wurden Einschichtplatten analog Beispiel 2 hergestellt. Als Leimharz 2 diente die wäßrige Lösung eines Melamin-Harnstoff-Formaldehyd-Harzes mit einem Trockengehalt von 65 ± 1 Gew.%, einem pH-Wert von 9,6 bis 10,0, einer Viskosität von 500 bis 700 mPa · s (20 °C) und einer Dichte von 1,3 g/cm$^3$ (20 °C).

Als Leimharz 3 diente die wäßrige Lösung eines Harnstoff-Formaldehyd-Harzes mit einem Trockengehalt von 66,5 ± 1 Gew.%, einem pH-Wert von 8,4 bis 9,0, einer Viskosität von ca. 850 bis 1 100 mPa · s (20 °C) und einer Dichte von 1,29 g/cm$^3$ (20 °C).

Die verwendeten Härterlösungen, setzen sich folgendermaßen zusammen (Gew.%) :

|  | Salz 1 | NH$_4$Cl | Harnstoff | Ammoniak | Wasser |
|---|---|---|---|---|---|
| Härter 7 | 25,3 | - | 24,1 | 2,0 | 48,6 |
| Härter 8 | 25,5 | - | - | - | 74,5 |
| Vergleichs-härter 3 | - | 4,8 | 24,1 | 2,0 | 69,1 |
| Vergleichs-härter 4 | - | 4,0 | - | 1,0 | 95,0 |

Ergebnisse siehe Tabelle 3.

### Beispiel 4

Es wurden Einschichtplatten aus 50 Gew.% Buchenspänen und 50 Gew.% Fichtenspänen hergestellt

4

(Dicke 18 mm). Die Liegezeit der beleimten Späne betrug 30 Minuten, ihre Preßzeit betrug 210 Sekunden bei einer Temperatur von 175 °C.

Die Platten wurden 2 Tage lang nachgetempert.

Als Leimharz diente das in Beispiel 1 beschriebene Leimharz 1. Die Festharzdosierung, bezogen auf atro Späne, betrug 12 Gew.%.

Die verwendeten Härterlösungen setzen sich folgendermaßen zusammen (Gew.%) :

|  | Salz 1 | NH$_4$Cl | NH$_4$-Formiat | Harnstoff | Ammoniak | Wasser |
|---|---|---|---|---|---|---|
| Härter 9 | 27,0 | - | - | 13,0 | 2,2 | 57,8 |
| Härter 10 | 37,8 | - | - | 13,0 | 2,2 | 47,0 |
| Härter 11 | 15,0 | - | - | 13,0 | 7,0 | 65,0 |
| Vergleichs- härter 5 | - | 5,2 | - | 26,1 | 2,2 | 66,5 |
| Vergleichs- härter 6 | - | - | 12,6 | 13,0 | 2,2 | 72,2 |

Ergebnisse siehe Tabelle 4.

Beispiel 5

Es wurden Einschichtplatten analog Beispiel 4 hergestellt.

Als Leimharz diente das in Beispiel 1 beschriebene Leimharz 1. Die Festharzdosierung, bezogen auf atro Späne, betrug jedoch nur 10 Gew.%.

Die verwendeten Härterlösungen setzen sich folgendermaßen zusammen (Gew.%) :

|  | Salz 2* | Harnstoff | Diammoniummalonat | Ammoniak | Wasser |
|---|---|---|---|---|---|
| Härter 12 | 34,2 | 16,4 | - | 3,4 | 46,0 |
| Vergleichs- härter 7 | - | 17,5 | 29,9 | 3,6 | 49,0 |

\* Salz 2 ist das Diammoniumsalz einer Mischung, bestehend aus 33,3 Gew.% Bernsteinsäure, 33,3 Gew.% Glutarsäure und 33,3 Gew.% Adipinsäure.

Ergebnisse :

| Härter |  | Härter 12 | Vergleichshärter 7 |
|---|---|---|---|
| Dichte kg/m$^3$ | $\bar{x}$ | 691 | 684 |
| Querzug tro. N/mm$^2$ | $\bar{x}$ | 0,71 | 0,59 |
| Querzug V 100 N/mm$^2$ | $\bar{x}$ | 0,22 | 0,21 |
| Quellung n. 24 h in % | $\bar{x}$ | 10,9 | 11,5 |
| % Feuchte |  | 6,11 | 6,12 |
| mg HCHO/100 g atro |  | 3,62 | 4,79 |

($\bar{x}$ = Mittelwerte aus 3 Platten = 30 Prüfkörper)

Tabelle 1

| Ansatz: | | Platte 1.1 | | Platte 1.2 (Vergleich) | |
|---|---|---|---|---|---|
| | | Deck-schicht | Mittel-schicht | Deck-schicht | Mittel-schicht |
| Leimharz 1 | Gew.-Teile | 100,0 | 100,0 | 100,0 | 100,0 |
| Paraffin-Emulsion (50 Gew.%ig) | " | 9,0 | 5,0 | 9,0 | 5,0 |
| Härter 1 | " | 17,0 | - | - | - |
| Härter 2 | " | - | 24,0 | - | - |
| Vergleichs-härter 1 | " | - | - | 17,0 | - |
| Vergleichs-härter 2 | " | - | - | - | 24,0 |
| Festharzgehalt im Ansatz | Gew.% | 50,0 | 48,8 | 50,0 | 48,8 |
| Festharz auf atro Späne | Gew.% | 14,0 | 13,0 | 14,0 | 13,0 |
| Gelierzeit bei 100°C | sec | 76 | 64 | 195 | 83 |
| Viskosität im 4 mm Ford-Becher | sec | 43 | 61 | 37 | 27 |
| Feuchte im Spankuchen | Gew.% | 12,0 | 11,0 | 13,3 | 13,5 |

Tabelle 1 (Fortsetzung)

Plattenprüfung/geschliffen:

| | | | Platte 1.1 | Platte 1.2 (Vergleich) |
|---|---|---|---|---|
| Dichte | kg/m$^3$ | $\bar{\bar{x}}$ | 753 | 774 |
| Biegefestigkeit | N/mm$^2$ | $\bar{\bar{x}}$ | 28,7 | 28,1 |
| Querzugfestigkeit trocken | N/mm$^2$ | $\bar{\bar{x}}$ | 1,21 | 1,07 |
| | N/mm$^2$ | $s_{\bar{x}}$ | 0,12 | 0,06 |
| | % | $v_{\bar{x}}$ | 10,0 | 5,2 |
| Querzugfestigkeit V 100 | N/mm$^2$ | $\bar{\bar{x}}$ | 0,46 | 0,44 |
| | N/mm$^2$ | $s_{\bar{x}}$ | 0,03 | 0,01 |
| | % | $v_{\bar{x}}$ | 5,8 | 1,9 |
| Abhebfestigkeit oben | N/mm$^2$ | $\bar{\bar{x}}$ | 1,54 | 1,47 |
| Abhebfestigkeit unten | N/mm$^2$ | $\bar{\bar{x}}$ | 1,71 | 1,63 |
| Quellung nach 2 Std. | % | $\bar{\bar{x}}$ | 2,2 | 1,8 |
| Quellung nach 24 Std. | % | $\bar{\bar{x}}$ | 7,6 | 5,6 |

($\bar{x}$ = Mittelwert aus 5 Platten = 50 Prüfkörpern)

Formaldehydabgabe/FESYP:

| | | | | |
|---|---|---|---|---|
| 1. Probe | % Feuchte | | 7,3 | 9,4 |
| 2. Probe | % Feuchte | | 7,0 | 8,7 |
| 1. Probe | mg HCHO/100 g atro Platte | | 7,8 | 20,9 |
| 2. Probe | mg HCHO/200 g atro Platte | | 7,4 | 19,8 |

## Tabelle 2

Ansatz: (Vergleich)

| | | | | | | |
|---|---|---|---|---|---|---|
| Leimharz 1 | Gew.-Teile | 100,0 | 100,0 | 100,0 | 100,0 | 100,0 |
| Paraffin-Emulsion (50 Gew.%ig) | " | 5,0 | 5,0 | 5,0 | 5,0 | 5,0 |
| Härter 3 | " | 25,0 | - | - | - | - |
| Härter 4 | " | - | 25,0 | - | - | - |
| Härter 5 | " | - | - | 25,0 | - | - |
| Härter 6 | " | - | - | - | 25,0 | - |
| Vergleichs-härter 2 | " | - | - | - | - | 25,0 |
| Gelierzeit bei 100°C | sec | 53 | 64 | 74 | 148 | 83 |
| Viskosität in 4 mm Ford-Becher | sec | 32 | 26 | 21 | 18 | 19 |
| Feuchte im Spankuchen | Gew.% | 13,9 | 12,6 | 13,0 | 12,9 | 13,6 |

Plattenprüfung/geschliffen:

| | | | | | | | |
|---|---|---|---|---|---|---|---|
| Dichte | kg/m$^3$ | $\bar{x}$ | 767 | 754 | 739 | 715 | 766 |
| Biegefestigkeit | N/mm$^2$ | $\bar{x}$ | 31,5 | 32,8 | 31,9 | 32,0 | 36,2 |
| Querzugfestigkeit V 20 | N/mm$^2$ | $\bar{x}$ | 1,10 | 1,22 | 0,94 | 0,94 | 1,15 |
| | N/mm$^2$ | $s_{\bar{x}}$ | 0,06 | 0,10 | 0,10 | 0,10 | 0,07 |
| | % | $v_{\bar{x}}$ | 5,0 | 8,1 | 10,1 | 10,7 | 5,6 |

Tabelle 2 (Fortsetzung)

<div align="right">(Vergleich)</div>

| Querzugfestigkeit V 100 | N/mm$^2$ | $\bar{x}$ | 0,44 | 0,44 | 0,41 | 0,42 | 0,47 |
|---|---|---|---|---|---|---|---|
| | N/mm$^2$ | $s_{\bar{x}}$ | 0,01 | 0,07 | 0,08 | 0,06 | 0,02 |
| | % | $v_{\bar{x}}$ | 2,3 | 16,0 | 19,4 | 13,2 | 4,9 |
| Quellung nach 2 Std. | % | $\bar{x}$ | 1,9 | 1,9 | 1,9 | 1,9 | 2,1 |
| Quellung nach 24 Std. | % | $\bar{x}$ | 6,2 | 6,5 | 6,3 | 6,2 | 6,6 |

($\bar{x}$ = Mittelwert aus 3 Platten = 30 Prüfkörpern)

<u>Formaldehydabgabe/FESYP</u>:

| 1. Probe | % Feuchte | 8,5 | 7,5 | 7,6 | 7,4 | 9,2 |
|---|---|---|---|---|---|---|
| 2. Probe | % Feuchte | 8,4 | 7,7 | 7,8 | 7,5 | 9,0 |
| 1. Probe | mg HCHO/100 g atro Platte | 19,9 | 7,6 | 9,5 | 16,8 | 18,3 |
| 2. Probe | mg HCHO/100 g atro Platte | 18,0 | 6,3 | 9,0 | 15,7 | 16,6 |

0 150 420

## Tabelle 3

| Ansatz: | | | | (Vergleich) | | (Vergleich) |
|---|---|---|---|---|---|---|
| Leimharz 2 | Gew.-Teile | 100,0 | 100,0 | – | – |
| Leimharz 3 | " | – | – | 100,0 | 100,0 |
| Paraffin-Emulsion (50 Gew.%ig) | " | 5,2 | 5,2 | 8,3 | 8,3 |
| Härter 7 | " | 24,9 | – | – | – |
| Härter 8 | " | – | – | 24,7 | – |
| Vergleichs-härter 3 | " | – | 24,9 | – | – |
| Vergleichs-härter 4 | " | – | – | – | 24,7 |

====================================================================================

| | | | | | |
|---|---|---|---|---|---|
| Festharz im Ansatz | Gew.% | 50,0 | | 50,0 | |
| Festharz auf atro Späne | Gew.% | 12,0 | | 8,0 | |

====================================================================================

| | | | | | |
|---|---|---|---|---|---|
| Gelierzeit bei 100°C | sec | 83 | 84 | 184 | 89 |
| Viskosität im 4 mm Ford-Becher | sec | 21 | 17 | 40 | 19 |
| Feuchte im Spankuchen | Gew.% | 12,4 | 12,6 | 10,5 | 10,4 |

====================================================================================

### Plattenprüfung/geschliffen:

| | | | | | | | |
|---|---|---|---|---|---|---|---|
| Dichte | kg/m$^3$ | $\bar{x}$ | 763 | 766 | 743 | 760 |
| Biegefestigkeit | N/mm$^2$ | $\bar{x}$ | 32,6 | 33,8 | 27,5 | 29,1 |
| Querzugfestigkeit V 20 | N/mm$^2$ | $\bar{x}$ | 1,30 | 1,24 | 0,72 | 0,69 |
| | N/mm$^2$ | $s_{\bar{x}}$ | 0,06 | 0,09 | 0,02 | 0,02 |
| | % | $v_{\bar{x}}$ | 4,2 | 7,5 | 2,4 | 2,2 |

0 150 420

Tabelle 3 (Fortsetzung)

|  |  |  |  | (Vergleich) |  | (Vergleich) |
|---|---|---|---|---|---|---|
| Querzugfestigkeit V 100 | N/mm$^2$ | $\bar{x}$ | 0,20 | 0,37 |  |  |
|  | N/mm$^2$ | $s_{\bar{x}}$ | 0,01 | 0,01 |  |  |
|  | % | $v_{\bar{x}}$ | 2,9 | 3,1 |  |  |
| Quellung nach 2 Std. | % | $\bar{x}$ | 2,1 | 2,1 | 3,3 | 3,1 |
| Quellung nach 24 Std. | % | $\bar{x}$ | 7,7 | 7,0 | 14,7 | 13,8 |

($\bar{x}$ = Mittelwert aus 3 Platten = 30 Prüfkörpern)

Formaldehydabgabe/FESYP:

| 1. Probe | % Feuchte | 6,9 | 7,4 | 6,3 | 6,4 |
|---|---|---|---|---|---|
| 2. Probe | % Feuchte | 6,8 | 7,3 | 6,2 | 6,3 |
| 1. Probe | mg HCHO/100 g atro Platte | 6,3 | 13,0 | 11,7 | 16,7 |
| 2. Probe | mg HCHO/100 g atro Platte | 7,0 | 12,2 | 11,0 | 16,9 |

0 150 420

## Tabelle 4

0 150 420

| Ansatz: | | | | | (Ver-gleich) | (Ver-gleich) |
|---|---|---|---|---|---|---|
| Leimharz 1 | Gew.-Teile | 100,0 | 100,0 | 100,0 | 100,0 | 100,0 |
| Paraffin-Emulsion (50 Gew.%ig) | " | 5,0 | 5,0 | 5,0 | 5,0 | 5,0 |
| Härter 9 | " | 23,0 | - | - | - | - |
| Härter 10 | " | - | 23,0 | - | - | - |
| Härter 11 | " | - | - | 23,0 | - | - |
| Vergleichs-härter 5 | " | - | - | - | 23,0 | - |
| Vergleichs-härter 6 | " | - | - | - | - | 23,0 |
| Gelierzeit bei 100°C | sec | 51 | 49 | 60 | 80 | 67 |
| Viskosität im 4 mm Ford-Becher | sec | 34 | 44 | 25 | 20 | 21 |
| Feuchte im Spankuchen | % | 13,7 | 13,6 | 11,7 | 13,8 | 14,7 |

Plattenprüfung/geschliffen:

| | | | | | | | |
|---|---|---|---|---|---|---|---|
| Dichte | $kg/m^3$ | $\bar{x}$ | 730 | 744 | 722 | 738 | 713 |
| Biegefestigkeit | $N/mm^2$ | $\bar{x}$ | 29,3 | 30,7 | 30,3 | 29,3 | 29,3 |
| Querzugfestigkeit V 20 | $N/mm^2$ | $\bar{x}$ | 0,69 | 0,83 | 0,77 | 0,97 | 0,81 |
| Querzugfestigkeit V 100 | $N/mm^2$ | $\bar{x}$ | 0,38 | 0,34 | 0,32 | 0,42 | 0,38 |
| | $N/mm^2$ | $s_{\bar{x}}$ | 0,03 | 0,02 | 0,03 | 0,06 | 0,05 |
| | % | $v_{\bar{x}}$ | 7,7 | 5,6 | 8,6 | 14,9 | 13,1 |

## Tabelle 4 (Fortsetzung)

| | | | | | | (Ver-<br>gleich) | (Ver-<br>gleich) |
|---|---|---|---|---|---|---|---|
| Quellung nach 2 Std. | % | $\bar{x}$ | 1,9 | 2,1 | 2,1 | 2,0 | 2,1 |
| Quellung nach 24 Std. | % | $\bar{x}$ | 6,0 | 7,1 | 6,9 | 6,2 | 6,4 |

($\bar{x}$ = Mittelwert aus 5 Platten = 50 Prüfkörpern)

Formaldehydabgabe/FESYP:

| | | | | | | |
|---|---|---|---|---|---|---|
| 1. Probe | % Feuchte | 8,3 | 7,6 | 7,2 | 9,3 | 8,4 |
| 2. Probe | % Feuchte | 8,1 | 7,1 | 7,4 | 8,9 | 9,0 |
| 1. Probe | mg HCHO/100 g atro Platte | 11,0 | 5,6 | 12,0 | 18,6 | 16,8 |
| 2. Probe | mg HCHO/100 g atro Platte | 10,9 | 5,0 | 11,6 | 16,1 | 18,3 |

0 150 420

**0 150 420**

Patentansprüche

1. Wäßrige Härterlösungen für Aminoplastharze, die zur Herstellung von Spanholzwerkstoffen verwendet werden, enthaltend 2 bis 65 Gew.%, bezogen auf die Härterlösung, an Diammoniumsalzen einer Mischung aliphatischer gesättigter Dicarbonsäuren mit 2 bis 10 Kohlenstoffatomen, deren Kohlenstoffkette gegebenenfalls durch Sauerstoffatome unterbrochen ist.

2. Wäßrige Härterlösungen gemäß Anspruch 1, enthaltend 15 bis 40 Gew.%, bezogen auf die Härterlösung, an Diammoniumsalzen.

3. Wäßrige Härterlösungen gemäß Anspruch 1, enthaltend Diammoniumsalze einer Mischung aliphatischer gesättigter Dicarbonsäuren mit 4 bis 6 Kohlenstoffatomen.

4. Wäßrige Härterlösungen gemäß Anspruch 1, enthaltend Diammoniumsalze einer Mischung aliphatischer gesättigter Dicarbonsäuren, enthaltend 23 bis 38 Gew.% Bernsteinsäure, 30 bis 55 Gew.% Glutarsäure und 20 bis 35 Gew.% Adipinsäure.

5. Wäßrige Härterlösungen gemäß Anspruch 1, enthaltend bis zu 26 Gew.%, bezogen auf die Härterlösung, an Harnstoff.

6. Verwendung von wäßrigen Lösungen, enthaltend 2 bis 65 Gew.%, bezogen auf die Lösung, an Diammoniumsalzen einer Mischung aliphatischer gesättigter Dicarbonsäuren mit 2 bis 10 Kohlenstoffatomen, deren Kohlenstoffkette gegebenenfalls durch Sauerstoffatome unterbrochen ist, als Härter für Aminoplastharze, die zur Herstellung von Spanholzwerkstoffen verwendet werden.

7. Verwendung von wäßrigen Lösungen gemäß Anspruch 6, enthaltend 15 bis 40 Gew.%, bezogen auf Lösung an Diammoniumsalzen.

8. Verwendung von wäßrigen Lösungen gemäß Anspruch 6, enthaltend Diammoniumsalze einer Mischung aliphatischer gesättigter Dicarbonsäuren mit 4 bis 6 Kohlenstoffatomen.

9. Verwendung von wäßrigen Lösungen gemäß Anspruch 6, enthaltend Diammoniumsalze einer Mischung aliphatischer gesättigter Dicarbonsäuren, enthaltend 23 bis 38 Gew.% Bernsteinsäure, 30 bis 55 Gew.% Glutarsäure und 20 bis 35 Gew.% Adipinsäure.

10. Verwendung von wäßrigen Lösungen gemäß Anspruch 6, enthaltend bis zu 26 Gew.%, bezogen auf die Lösung, an Harnstoff.

11. Leimharzflotte für die Herstellung von Spanholzwerkstoffen, enthaltend ein Aminoplastharz und 3 bis 19 Gew.%, bezogen auf den Flüssigharzanteil, einer Härterlösung gemäß Anspruch 1.

12. Verfahren zur Herstellung von Spanholzwerkstoffen mittels Aminoplastharzen, dadurch gekennzeichnet, daß man die Aushärtung der Aminoplastharze mit einer wäßrigen Härterlösung, enthaltend 2 bis 65 Gew.%, bezogen auf die Härterlösung, an Diammoniumsalzen einer Mischung aliphatischer gesättigter Dicarbonsäuren mit 2 bis 10 Kohlenstoffatomen, deren Kohlenstoffkette gegebenenfalls durch Sauerstoffatome unterbrochen ist, durchführt.

Claims

1. An aqueous hardener solution for aminoplast resins which are used for the production of wood chip materials, containing from 2 to 65 % by weight, based on the hardener solution, of diammonium salts of a mixture of aliphatic saturated dicarboxylic acids which contain from 2 to 10 carbon atoms and whose carbon chain may be interrupted by oxygen atoms.

2. An aqueous hardener solution as claimed in claim 1, containing from 15 to 40 % by weight, based on the hardener solution of diammonium salts.

3. An aqueous hardener solution as claimed in claim 1, containing diammonium salts of a mixture of aliphatic saturated dicarboxylic acids containing from 4 to 6 carbon atoms.

4. An aqueous hardener solution as claimed in claim 1, containing diammonium salts of a mixture of aliphatic saturated dicarboxylic acids, which mixture contains from 23 to 38 % by weight of succinic acid, from 30 to 55 % by weight of glutaric acid and from 20 to 35 % by weight of adipic acid.

5. An aqueous hardener solution as claimed in claim 1, containing up to 26 % by weight, based on the hardener solution, of urea.

6. The use of an aqueous solution containing from 2 to 65 % by weight, based on the solution, of diammonium salts of a mixture of aliphatic saturated dicarboxylic acids which contain from 2 to 10 carbon atoms and whose carbon chain may be interrupted by oxygen atoms, as hardener for aminoplast resins which are used for the production of wood chip materials.

7. The use of an aqueous solution, as claimed in claim 6, which solution contains from 15 to 40 % by weight, based on the solution, of diammonium salts.

8. The use of an aqueous solution, as claimed in claim 6, which solution contains diammonium salts of a mixture of aliphatic saturated dicarboxylic acids containing from 4 to 6 carbon atoms.

9. The use of an aqueous solution, as claimed in claim 6, which solution contains diammonium salts of a mixture of aliphatic saturated dicarboxylic acids, said mixture containing from 23 to 38 % by weight of succinic acid, from 30 to 55 % by weight of glutaric acid and from 20 to 35 % by weight of adipic acid.

10. The use of an aqueous solution, as claimed in claim 6, which solution contains up to 26 % by weight, based on the solution, of urea.

11. An adhesive solution for the production of wood chip materials, containing an aminoplast resin and from 3 to 19 % by weight, based on the amount of liquid resin, of a hardener solution as claimed in claim 1.

12. A process for the production of wood chip materials using an aminoplast resin, wherein the curing of the aminoplast resin is effected with an aqueous hardener solution containing from 2 to 65 % by weight, based on the hardener solution, of diammonium salts of a mixture of aliphatic saturated dicarboxylic acids which contain from 2 to 10 carbon atoms and whose carbon chain may be interrupted by oxygen atoms.

**Revendications**

1. Solutions aqueuses de durcisseurs pour résines aminoplastes qui sont utilisées pour la préparation de matières en bois reconstitué, contenant 2 à 65 % en poids, rapportés à la solution de durcisseur, de sels de diammonium d'un mélange d'acides dicarboxyliques, saturés, aliphatiques, ayant 2 à 10 atomes de carbone, dont la chaîne de carbone est interrompue éventuellement par des atomes d'oxygène.

2. Solutions aqueuses de durcisseurs selon la revendication 1, contenant 15 à 40 % en poids, rapportés à la solution de durcisseurs, de sels de diammonium.

3. Solutions aqueuses de durcisseurs selon la revendication 1, contenant des sels de diammonium d'un mélange d'acides dicarboxyliques saturés, aliphatiques, de 4 à 6 atomes de carbone.

4. Solutions aqueuses de durcisseurs selon la revendication 1, contenant des sels de diammonium d'un mélange d'acides dicarboxyliques saturés, aliphatiques, contenant 23 à 38 % en poids d'acide succinique, 30 à 55 % en poids d'acide glutarique et 20 à 35 % en poids d'acide adipique.

5. Solutions aqueuses de durcisseurs selon la revendication 1, contenant jusqu'à 26 % en poids d'urée, rapportés à la solution de durcisseur.

6. Utilisation de solutions aqueuses contenant 2 à 65 % en poids, rapportés à la solution, de sels de diammonium d'un mélange d'acides dicarboxyliques saturés, aliphatiques, ayant 2 à 10 atomes de carbone, dont la chaîne de carbone est interrompue éventuellement par des atomes d'oxygène, comme durcisseurs pour résines aminoplastes qui sont utilisées pour la préparation de matières en bois reconstitué.

7. Utilisation de solutions aqueuses selon la revendication 6, contenant 15 à 40 % en poids, rapportés à la solution, de sels de diammonium.

8. Utilisation de solutions aqueuses selon la revendication 6, contenant des sels de diammonium d'un mélange d'acides dicarboxyliques, saturés, aliphatiques, ayant 4 à 6 atomes de carbone.

9. Utilisation de solutions aqueuses selon la revendication 6, contenant des sels de diammonium d'un mélange d'acides dicarboxyliques, saturés, aliphatiques, contenant 23 à 38 % en poids d'acide succinique, 30 à 55 % en poids d'acide glutarique et 20 à 35 % en poids d'acide adipique.

10. Utilisation de solutions aqueuses selon la revendication 6, contenant jusqu'à 26 % en poids, rapportés à la solution, d'urée.

11. Bain de résine de collage pour la préparation des matières en bois reconstitué, contenant une résine aminoplaste et 3 à 19 % en poids, rapportés à la partie résine liquide, d'une solution de durcisseur selon la revendication 1.

12. Procédé de préparation de matières en bois reconstitué au moyen de résines aminoplastes, caractérisé par le fait que l'on effectue le durcissement complet de la résine aminoplaste avec une solution aqueuse de durcisseur contenant 2 à 65 % en poids, rapportés à la solution de trempe, de sels de diammonium d'un mélange d'acides dicarboxyliques, saturés, aliphatiques, ayant 2 à 10 atomes de carbone, dont la chaîne de carbone est interrompue éventuellement par des atomes d'oxygène.